# EUROPEAN PATENT SPECIFICATION

(11) **EP 4 636 315 B1**
(45) Date of publication and mention of the grant of the patent: **09.09.2026**
(21) Application number: 25165268.1
(22) Date of filing: 21.03.2025
(51) Int. Cl.: F24C 15/02, A47J 37/06, E05C 19/02, F24C 15/32

(54) **AIR HEATING COOKER**
HEIZLUFT-KOCHGERÄT
APPAREIL DE CUISSON À CHAUFFAGE D'AIR

(30) Priority: 19.04.2024 CN 202420826482 U
(43) Date of publication of application: 22.10.2025
(73) Proprietor: Tsann Kuen (Zhangzhou) Enterprise Co., Ltd., Fujian 363107 (CN)
(72) Inventor: ZHAN, Yixin, Zhangzhou City, Fujian (CN); WEI, Bo, Zhangzhou City, Fujian (CN)
(74) Representative: Balder IP Law, S.L.

(56) References cited:
- DE-A1- 102018 201 950
- FR-A- 615 794
- US-A- 3 045 663
- US-A1- 2022 142 404
- US-A1- 2023 358 409

## Description

### TECHNICAL FIELD

The invention relates to an air heating cooker.

### BACKGROUND

An air heating cooker is a cooker that uses hot air to cook food, such as an air fryer oven or an air fryer. The air fryer oven is an air heating cooker provided with an oven door panel at the cooking chamber opening, and it functions as an oven by closing or opening the oven door panel. However, if the air fryer oven does not function as an oven (for example, needs to switch to an air fryer), the oven door panel will become an unnecessary structure, making it inconvenient to use. In this case, the oven door panel will often be removed. In this way, the repeated removal and mounting of the oven door panel easily causes wear of the connecting structure; and the oven door panel needs to be stored separately after being removed, making it lost easily.

The related prior art comprises, for example, US2022/142404A1, US2023/358409A1, DE102018201950A1, US3045663A and FR615794A.

### SUMMARY

In view of this, in order to solve the above problem, the invention provides an air heating cooker.

The invention is defined in the appended set of claims.

The technical solution provided by the invention has the following beneficial effects:
The casing of the main body is provided with the accommodating space, and the oven door panel is slidably assembled in the accommodating space. When the oven door panel is needed, the oven door panel is drawn out to the second position, and then flipped cover the cooking chamber opening. When the oven door panel is not needed, the oven door panel is stored in the accommodating space. There is no need to remove and mount the oven door panel, and the oven door panel is stored in the casing of the main body, so that the oven door panel can be stored in an integrated structure and will not be lost.

### BRIEF DESCRIPTION OF DRAWINGS

FIG. 1 is a schematic three-dimensional view of an air heating cooker when functioning as an air fryer oven according to an example, where an oven door panel does not completely cover a cooking chamber opening;
FIG. 2 is a top view of the structure shown in FIG. 1;
FIG. 3 is a sectional view taken along line A-A in FIG. 2;
FIG. 4 is a sectional view taken along line B-B in FIG. 2;
FIG. 5 is a sectional view taken along line C-C in FIG. 2;
FIG. 6 is a schematic structural view of a casing of a main body of the air heating cooker according to an example;
FIG. 7 is a schematic structural view I of the air heating cooker according to an example, where the oven door panel is in a first position;
FIG. 8 is a sectional view of the structure shown in FIG. 7;
FIG. 9 is a sectional view of the air heating cooker when the oven door panel is in the second position according to an example;
FIG. 10 is a schematic enlarged view of D in FIG. 9;
FIG. 11 is a sectional view of the air heating cooker when the oven door panel does not completely cover the cooking chamber opening according to an example;
FIG. 12 is a schematic enlarged view of E in FIG. 11;
FIG. 13 is a sectional view of the air heating cooker when the oven door panel completely covers the cooking chamber opening according to an example;
FIG. 14 is a schematic enlarged view of F in FIG. 13;
FIG. 15 is a schematic three-dimensional view I of the air heating cooker when functioning as an air fryer according to an example; and
FIG. 16 is a schematic three-dimensional view II of the air heating cooker when functioning as an air fryer according to an example.

### DESCRIPTION OF EMBODIMENTS

To further illustrate the examples, the accompanying drawings are provided in the invention. These accompanying drawings are a part of the contents disclosed in the invention that are mainly used to illustrate the examples, and can be used in conjunction with the related descriptions in the specification to explain the operation principle of the examples. With reference to these contents, those of ordinary skill in the art should be able to understand other possible embodiments and advantages of the invention. Components in the drawings are not drawn to scale, and like component symbols are usually used to represent like components.

In the description of the invention, the orientation or positional relationship indicated by the term "upper", "lower", "left", "right", "front", "rear" or the like is based on the orientation or positional relationship shown in the accompanying drawings. This is only for the convenience of describing the invention and simplifying the description, and does not indicate or imply that the device or element must have a specific orientation, or be constructed and operated in a specific orientation, and therefore cannot be understood as a limitation of the invention.

The invention will be further described in conjunction with the accompanying drawings and specific embodiments.

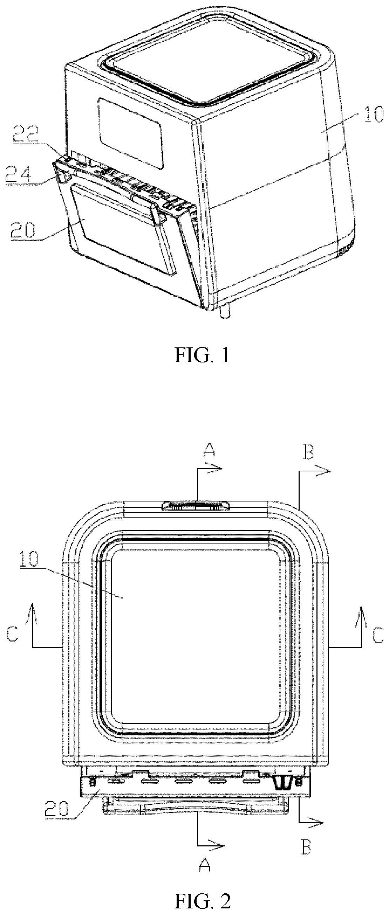

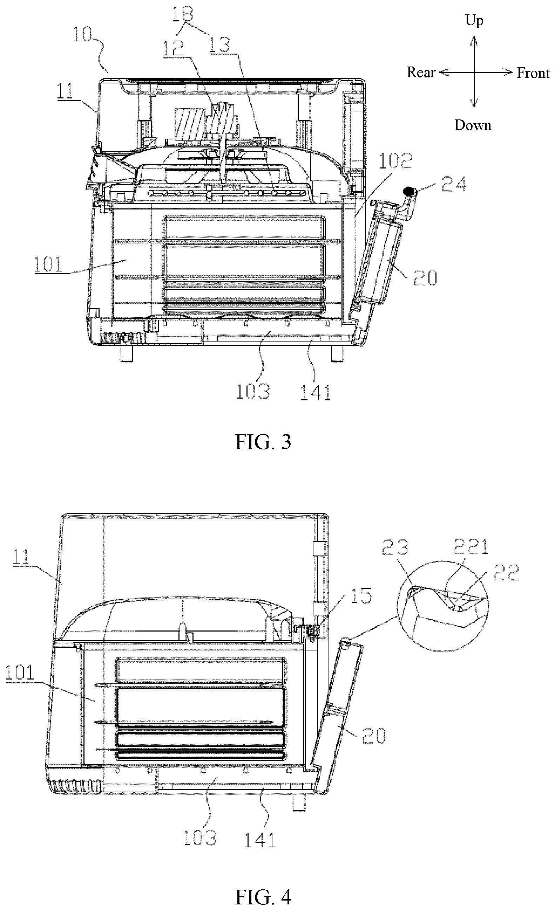

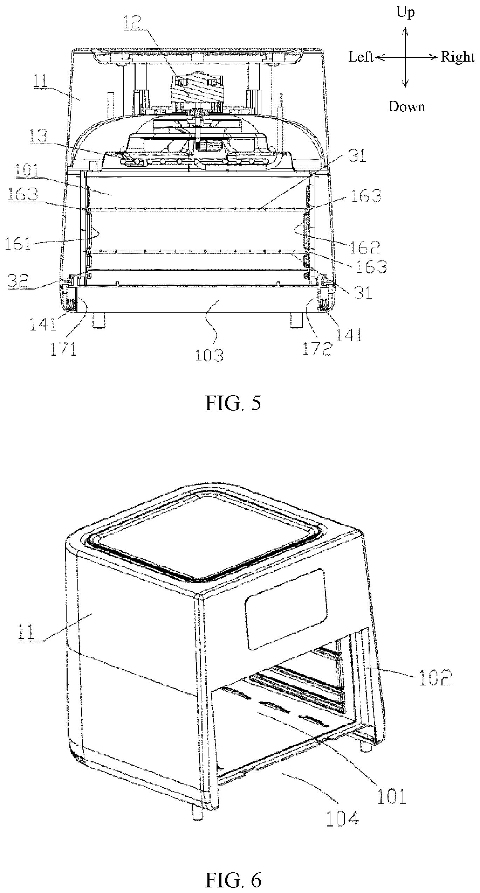

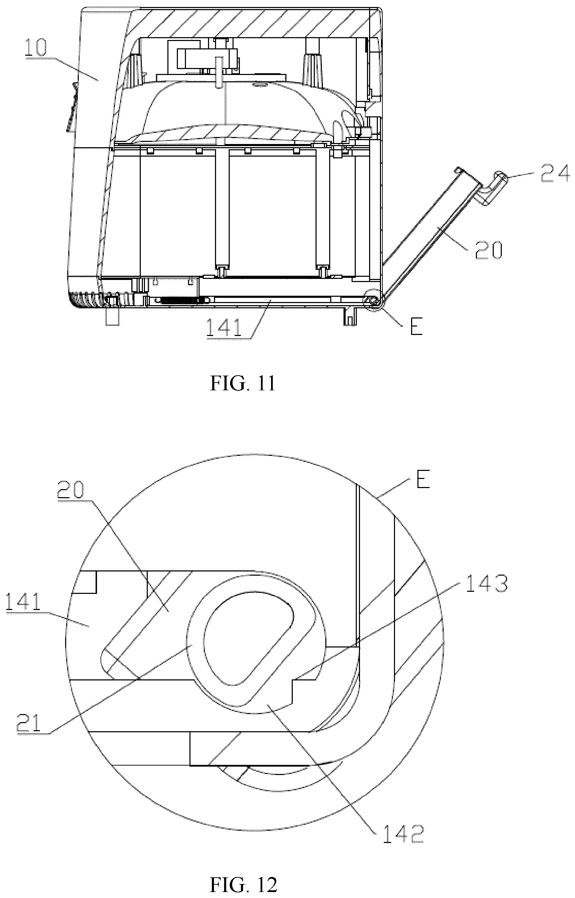

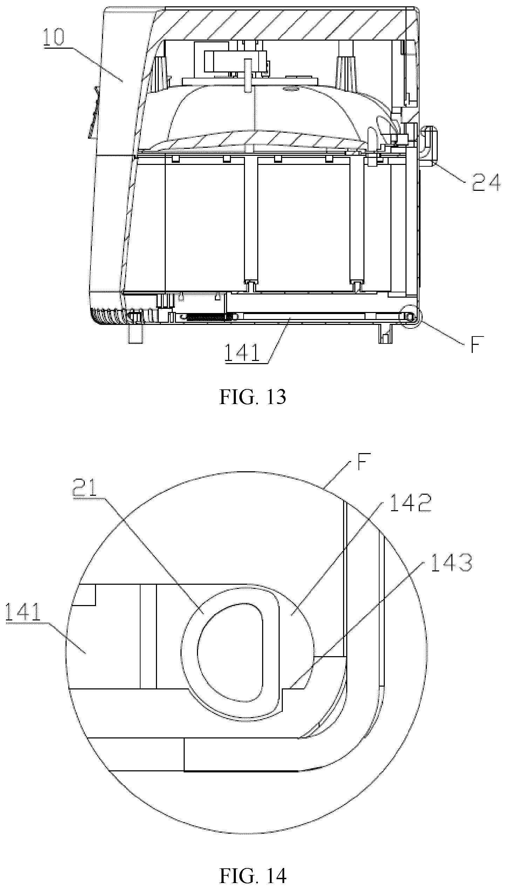

As shown in FIG. 1 to FIG. 14, this example provides an air heating cooker, including a main body 10 and an oven door panel 20. The main body 10 includes a casing 11 and a hot air component 18. The casing 11 has a cooking chamber 101 and a cooking chamber opening 102 in communication with the cooking chamber 101, and the hot air component 18 is assembled in the casing 11 to deliver hot air to the cooking chamber 101. Specifically, in this example, the hot air component 18 is located above the cooking chamber 101, the hot air component 18 includes a fan 12 and a heating tube 13, and the heating tube 13 is located below the fan 12. The fan 12 delivers air flows downward to the heating tube 13, and the air flows are heated by the heating tube 13 to form hot air that flows downward into the cooking chamber 101.

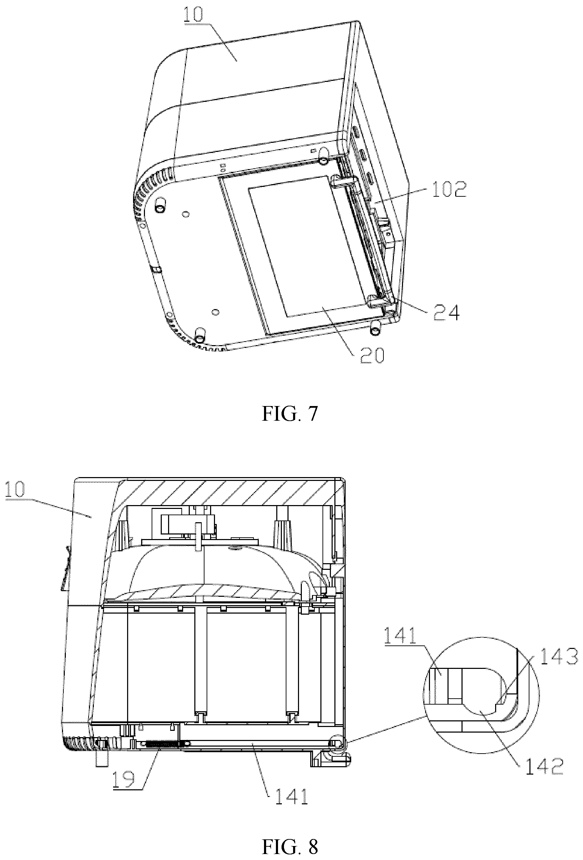

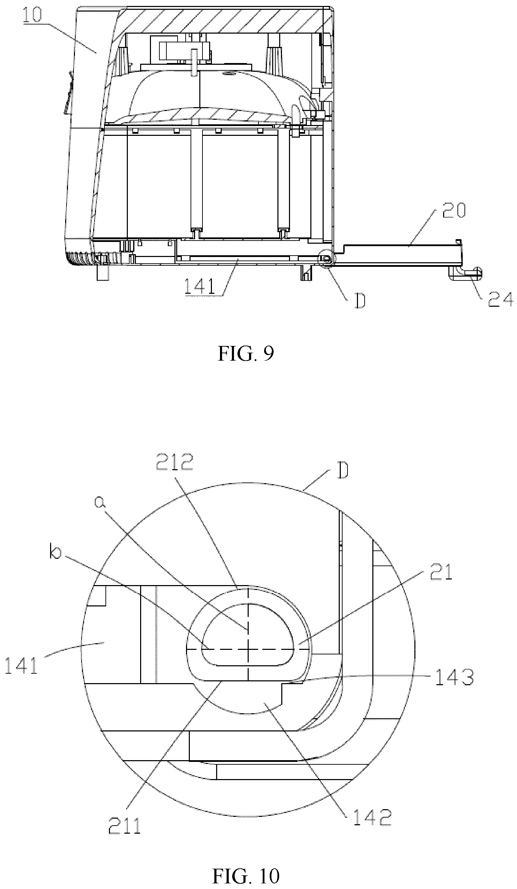

The casing 11 of the main body 10 is further provided with an accommodating space 103. The accommodating space 103 has an accommodating opening 104 on a same side as the cooking chamber opening 102. Specifically, the accommodating space 103 is located at a bottom of the casing 11 of the main body 10. In addition to having the accommodating opening 104 on the same side as the cooking chamber opening 102, a bottom of the accommodating space 103 is hollowed, which is equivalent to providing a groove structure at the bottom of the casing 11. Of course, in other examples, the bottom of the accommodating space 103 may also be not hollowed. The oven door panel 20 is slidably assembled in the accommodating space 103 so as to switch between a first position of being stored in the accommodating space 103 (as shown in FIG. 7 and FIG. 8) and a second position of being drawn out of the accommodating space 103 (as shown in FIG. 9). Specifically, when in the second position, as shown in FIG. 9, the oven door panel 20 is parallel to the sliding direction. The oven door panel 20, when in the second position, is hinged with the casing 11 and is flippable to cover the cooking chamber opening 102. As shown in FIG. 9 to FIG. 14, when the oven door panel 20 is in the second position, the oven door panel 20 is flipped upward by 90° to cover the cooking chamber opening 102.

According to the structure of the air heating cooker designed in this example, when the oven door panel 20 is needed, the oven door panel 20 is drawn out from the first position to the second position. The oven door panel 20, when in the second position, is in a hinged state and is flippable. Thereby, the oven door panel 20 can be flipped upward to cover the cooking chamber opening 102, so that the air heating cooker can function as an air fryer oven. When the oven door panel 20 is not needed, the oven door panel 20 is flipped from the position of covering the cooking chamber opening 102 downward to the second position, and then, the oven door panel 20 is pushed into the accommodating space 103. There is no need to remove and mount the oven door panel 20, and the oven door panel 20 is stored in the casing 11 of the main body 10, so that the oven door panel can be stored in an integrated structure and will not be lost.

Specifically, the accommodating space 103 is arranged at the bottom of the casing 11 of the main body 10, i.e., below the cooking chamber 101, which will not affect the assembly of other parts nor additionally increase the width of the product, thus being one of the preferred solutions. Of course, in other examples, the accommodating space 103 may also be arranged above or on the left or right side of the cooking chamber 101.

According to the invention, opposite side walls of the accommodating space 103 (i.e., a left side wall 171 and a right side wall 172 of the accommodating space 103) are each provided with a guide slotted hole 141. Specifically, the guide slotted hole 141 is an elongated slotted hole extending along a front-rear direction. Two sides of the oven door panel 20 are each provided with a convex column 21. Specifically, left and right sides of the oven door panel 20 are each provided with a convex column 21. The convex column 21 is fitted in the guide slotted hole 141 such that the oven door panel 20 is slidably assembled in the accommodating space 103. In this way, the structure is simple in design and easy to realize.

Further, a cross section of the convex column 21 has at least a first diameter of a minimum size and a second diameter of a maximum size, i.e., the cross section of the convex column 21 is non-circular. The cross section of the convex column 21 is D-shaped, as shown in FIG. 10, i.e., the cross section of the convex column 21 has a structure formed by a straight segment 211 and an arc segment 212, which is equivalent to a figure obtained by cutting a part off a circle and chamfering the connecting ends. Line a where the first diameter of the cross section of the convex column 21 is located is perpendicular to the straight segment 211, and Line b where the second diameter is located is parallel to the straight segment 211.

A width of the guide slotted hole 141 is matched with the first diameter of the convex column 21, and when the oven door panel 20 is parallel to an extending direction of the guide slotted hole 141, the first diameter of the convex column 21 is parallel to a width direction of the guide slotted hole 141 and slidably fitted in the guide slotted hole 141. An end of the guide slotted hole 141 facing the accommodating opening 104 is connected with a hinging slotted hole 142, and a hole diameter of the hinging slotted hole 142 is matched with the second diameter of the convex column 21. When the oven door panel 20 is in the second position, the convex column 21 is fitted in the hinging slotted hole 142 such that the oven door panel 20 is hinged. Thereby, when the oven door panel 20 is in the first position or in any position between the first position and the second position, the convex column 21 cannot rotate due to the limitation of the guide slotted hole 141, so the state of the oven door panel 20 can be kept without additional limiting structures for limiting. When the oven door panel 20 reaches the second position, the convex column 21 enters the hinging slotted hole 142, and the convex column 21 in this position can rotate, so that the limit to the rotation of the oven door panel 20 is removed and the oven door panel is freely flippable between the second position and the position of covering the cooking chamber opening 102.

Further, the oven door panel 20 flips only within the range between the second position and the position of covering the cooking chamber opening 102. Therefore, on the premise of not affecting the flip of the oven door panel 20, the hinging slotted hole 142 is further provided with an abutting step 143. The abutting step 143 is located on the opposite side of the guide slotted hole 141, i.e., the abutting step 143 and the guide slotted hole 141 are distributed on the front and rear sides of the hinging slotted hole 142. With the arrangement of the abutting step 143, when the oven door panel 20 switches from the position of covering the cooking chamber opening 102 to the second position, the convex column 21 can be abutted and limited by the abutting step 143, so that the oven door panel 20 is accurately limited to the second position and can be directly pushed into the accommodating space 103 when it needs to be stored, which makes the storage operation smoother and faster.

According to a preferred embodiment, tension springs 19 are further arranged in the accommodating space 103, a first end of each of the tension springs 19 is connected to the oven door panel 20, and specifically, to the convex column 21 of the oven door panel 20, a second end is connected to the casing 11, and each of the tension springs 19 applies a pulling force to the oven door panel 20 in a direction away from the accommodating opening 104, i.e., the tension spring 19 applies a pulling force that makes the oven door panel 20 stored into the accommodating space 103. In this way, when the oven door panel 20 is in the second position, as long as a slight external force is applied to push the oven door panel 20, the oven door panel 20 can be stored into the accommodating space 103 under the actions of the applied external force and the pulling force of the tension spring 19; or in a case where the pulling force of the tension spring 19 is strong enough, as long as the oven door panel 20 reaches the second position, it can be stored into the accommodating space 103 under the action of the pulling force of the tension spring 19, which makes the storage operation more labor-saving. Similarly, when the oven door panel 20 needs to be drawn out, it is required to apply a larger external force to overcome the pulling force of the tension spring 19 to pull the oven door panel 20.

The casing 11 is provided with an elastic pin 15 at the cooking chamber opening 102, the oven door panel 20 is provided with a first fixing slot 22 and a first inclined guide surface 23 arranged corresponding to the first fixing slot 22, and when the oven door panel 20 is flipped to cover the cooking chamber opening 102, the elastic pin 15 snaps into the first fixing slot 22 of the oven door panel 20 under cooperation of the first inclined guide surface 23 so as to be fixed. In this way, the oven door panel 20 covers the cooking chamber opening without additional operations.

Similarly, the first fixing slot 22 of the oven door panel 20 is a V-shaped slot and has a guide slot wall 221 facing away from the first inclined guide surface 23. When the oven door panel 20 needs to be opened, as long as a force that makes the oven door panel 20 open outward is applied, the elastic pin 15 is separated from the first fixing slot 22 under the cooperation of the guide slot wall 221, thereby realizing unlocking without additional unlocking operations.

The oven door panel 20 is provided with a handle 24, which is convenient for holding and force application.

Opposite vertical side walls of the cooking chamber 101 (a left side wall 161 and a right side wall 162 of the cooking chamber 101) are each provided with a plurality of insertion slots 163. The air heating cooker further includes oven racks 31 and a residue tray 32, and the oven racks 31 and the residue tray 32 are insertable into or separable from the insertion slots 163 of the cooking chamber 101 via the cooking chamber opening 102. The addition of the insertion slots 163 that can fix the oven racks 31 and the residue tray 32 facilitates the mounting of the oven racks 31 and the residue tray 32, so that food can be placed in a better way. Of course, in other examples, the oven racks 31 and the residue tray 32 may not be used.

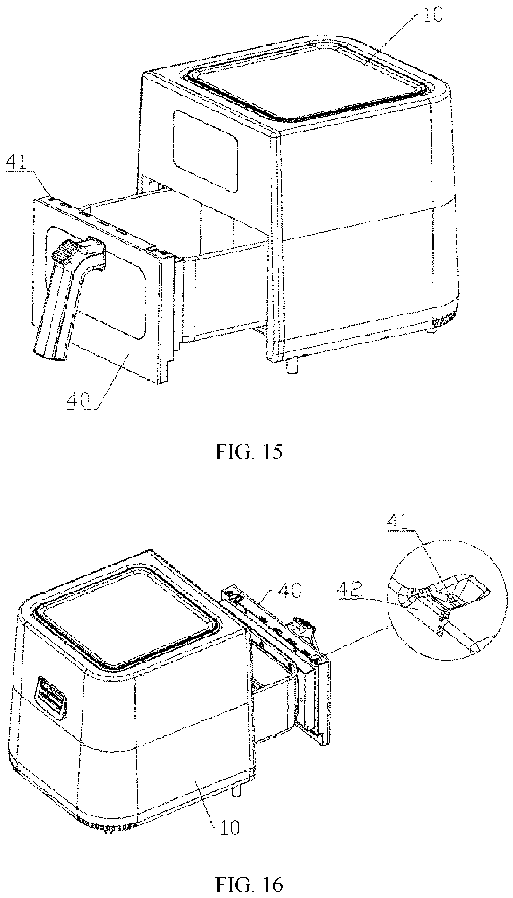

Further, as shown in FIG. 15 and FIG. 16, the air heating cooker further includes a frying basket 40, and when the oven door panel 20 is in the first position of being stored, i.e., when the oven door panel 20 is not used, the frying basket 40 is insertable into or separable from the cooking chamber 101 via the cooking chamber opening 102, so that the air heating cooker can function as an air fryer. The air heating cooker can switch between functioning as an air fryer oven and as an air fryer, and can be used for two purposes.

Further, the frying basket 40 is provided with a second fixing slot 41 and a second inclined guide surface 42 arranged corresponding to the second fixing slot 41. When the frying basket 40 is pushed into the cooking chamber 101 and in place, the elastic pin 15 snaps into the second fixing slot 41 of the frying basket 40 under cooperation of the second inclined guide surface 42 so as to be fixed. Specifically, the second fixing slot 41 has a same structure as the first fixing slot 22, both being V-shaped slots. In this way, when the frying basket 40 needs to be drawn out, as long as an outward force is applied to the frying basket 40, the elastic pin 15 can be separated from the second fixing slot 41, thereby realizing unlocking without additional unlocking operations.

Specifically, when the air heating cooker is not in use or when it is packaged in the factory, for the purpose of space saving, the oven door panel 20 may be stored in the accommodating space 103 of the casing 11 of the main body 10, and then, the frying basket 40 may be inserted into the cooking chamber 101, so that the air heating cooker can be stored and packaged in small size.

Although the invention has been specifically shown and described in connection with the preferred embodiments, it should be understood by those skilled in the art that various changes in form and details can be made. The scope of the invention is defined by the appended claims.

## Claims

1. An air heating cooker, comprising a main body (10) and an oven door panel, wherein the main body (10) comprises a casing (11) and a hot air component (18), the casing (11) has a cooking chamber (101) and a cooking chamber opening (102) in communication with the cooking chamber (101), the hot air component (18) is assembled in the casing (11) to deliver hot air to the cooking chamber (101); the casing (11) of the main body (10) is further provided with an accommodating space (103), the accommodating space (103) has an accommodating opening (104) on a same side as the cooking chamber opening (102), the oven door panel (20) is slidably assembled in the accommodating space (103) so as to switch between a first position of being stored in the accommodating space (103) and a second position of being drawn out of the accommodating space (103), and the oven door panel (20), when in the second position, is hinged with the casing (11) and is flippable to cover the cooking chamber opening (102), to function as an air fryer oven;
**characterized in that** opposite side walls of the accommodating space (103) are each provided with a guide slotted hole (141), two sides of the oven door panel (20) are each provided with a convex column (21), and the convex column (21) is fitted in the guide slotted hole (141) such that the oven door panel (20) is slidably assembled in the accommodating space (103);
a cross section of the convex column (21) has at least a first diameter of a minimum size and a second diameter of a maximum size, a width of the guide slotted hole (141) is matched with the first diameter of the convex column (21), when the oven door panel (20) is parallel to an extending direction of the guide slotted hole (141), the first diameter of the convex column (21) is parallel to a width direction of the guide slotted hole (141) and slidably fitted in the guide slotted hole (141), an end of the guide slotted hole (141) facing the accommodating opening (104) is connected with a hinging slotted hole (142), a hole diameter of the hinging slotted hole (142) is matched with the second diameter of the convex column (21), and when the oven door panel (20) is in the second position, the convex column (21) is fitted in the hinging slotted hole (142) such that the oven door panel (20) is hinged;
the cross section of the convex column (21) is D-shaped;
the air heating cooker further comprises a frying basket (40), and when the oven door panel (20) is in the first position of being stored, the frying basket (40) is insertable into or separable from the cooking chamber (101) via the cooking chamber opening (102).

2. The air heating cooker according to claim 1, **characterized in that** the accommodating space (103) is located at a bottom of the casing (11).

3. The air heating cooker according to claim 1, **characterized in that** tension springs (19) are further arranged in the accommodating space (103), a first end of each of the tension springs (19) is connected to the oven door panel (20), a second end of each of the tension springs (19) is connected to the casing (11), and each of the tension springs (19) applies a pulling force to the oven door panel (20) in a direction away from the accommodating opening (104).

4. The air heating cooker according to claim 3, **characterized in that** the first end of each of the tension springs (19) is connected to the convex column (21).

5. The air heating cooker according to claim 1, **characterized in that** the casing (11) is provided with an elastic pin (15) at the cooking chamber opening (102), the oven door panel (20) is provided with a first fixing slot (22) and a first inclined guide surface (23) arranged corresponding to the first fixing slot (22), and when the oven door panel (20) is flipped to cover the cooking chamber opening (102), the elastic pin (15) snaps into the first fixing slot (22) of the oven door panel (20) under cooperation of the first inclined guide surface (23) so as to be fixed.

6. The air heating cooker according to claim 1, **characterized in that** opposite vertical side walls of the cooking chamber (101) are each provided with a plurality of insertion slots (163), the air heating cooker further comprises oven racks (31) and a residue tray (32), and the oven racks (31) and the residue tray (32) are insertable into or separable from the plurality of insertion slots (163) of the cooking chamber (101) via the cooking chamber opening (102).

## Patentansprüche

1. Heißluftkocher, umfassend einen Hauptkörper (10) und eine Ofentürverkleidung, wobei der Hauptkörper (10) ein Gehäuse (11) und eine Heißluftkomponente (18) umfasst, wobei das Gehäuse (11) einen Garraum (101) und eine mit dem Garraum (101) in Kommunikation stehende Garraumöffnung (102) aufweist, wobei die Heißluftkomponente (18) in dem Gehäuse (11) angebracht ist, um Heißluft in den Garraum (101) zu leiten, wobei das Gehäuse (11) des Hauptkörpers (10) ferner mit einem Aufnahmeraum (103) versehen ist, wobei der Aufnahmeraum (103) eine Aufnahmeöffnung (104) auf derselben Seite wie die Garraumöffnung (102) aufweist, wobei die Ofentürverkleidung (20) verschiebbar in dem Aufnahmeraum (103) angebracht ist, um zwischen einer ersten Position, in der sie im Aufnahmeraum (103) verstaut ist, und einer zweiten Position, in der sie aus dem Aufnahmeraum (103) herausgezogen ist, umgeschaltet zu werden, wobei die Ofentürverkleidung (20), wenn sie sich in der zweiten Position befindet, am Gehäuse (11) angelenkt ist und hochgeklappt werden kann, um die Garraumöffnung (102) abzudecken, sodass eine Heißluftfritteuse-Funktion erfüllt wird,
**dadurch gekennzeichnet, dass** gegenüberliegende Seitenwände des Aufnahmeraums (103) jeweils mit einem Führungsschlitzloch (141) versehen sind, wobei zwei Seiten der Ofentürverkleidung (20) jeweils mit einer konvexen Säule (21) versehen sind und die konvexe Säule (21) so in das Führungsschlitzloch (141) eingepasst ist, dass die Ofentürverkleidung (20) verschiebbar im Aufnahmeraum (103) angebracht ist,
wobei ein Querschnitt der konvexen Säule (21) mindestens einen ersten Durchmesser mit einer Mindestgröße und einen zweiten Durchmesser mit einer Höchstgröße aufweist, wobei, wenn die Ofentürverkleidung (20) parallel zu einer Erstreckungsrichtung des Führungsschlitzloches (141) verläuft, eine Breite des Führungsschlitzloches (141) auf den ersten Durchmesser der konvexen Säule (21) abgestimmt ist, wobei der erste Durchmesser der konvexen Säule (21) parallel zu einer Breitenrichtung des Führungsschlitzloches (141) verläuft und verschiebbar in das Führungsschlitzloch (141) eingepasst ist, wobei ein der Aufnahmeöffnung (104) zugewandtes Ende des Führungsschlitzloches (141) mit einem Scharnierschlitzloch (142) verbunden ist, wobei ein Lochdurchmesser des Scharnierschlitzloches (142) auf den zweiten Durchmesser der konvexen Säule (21) abgestimmt ist, und wobei, wenn sich die Ofentürverkleidung (20) in der zweiten Position befindet, die konvexe Säule (21) so in das Scharnierschlitzloch (142) eingepasst ist, dass die Ofentürverkleidung (20) angelenkt ist,
wobei der Querschnitt der konvexen Säule (21) D-förmig ist,
wobei der Heißluftkocher ferner einen Frittierkorb (40) umfasst, wobei, wenn sich die Ofentürverkleidung (20) in der ersten Position, in der sie verstaut ist, befindet, der Frittierkorb (40) über die Garraumöffnung (102) in den Garraum (101) einsetzbar oder aus diesem entnehmbar ist.

2. Heißluftkocher nach Anspruch 1, **dadurch gekennzeichnet, dass** sich der Aufnahmeraum (103) an einem Boden des Gehäuses (11) befindet.

3. Heißluftkocher nach Anspruch 1, **dadurch gekennzeichnet, dass** im Aufnahmeraum (103) ferner Zugfedern (19) angeordnet sind, wobei ein erstes Ende jeder der Zugfedern (19) mit der Ofentürverkleidung (20) verbunden ist, während ein zweites Ende jeder der Zugfedern (19) mit dem Gehäuse (11) verbunden ist, und wobei jede der Zugfedern (19) eine Zugkraft auf die Ofentürverkleidung (20) in einer von der Aufnahmeöffnung (104) wegführenden Richtung ausübt.

4. Heißluftkocher nach Anspruch 3, **dadurch gekennzeichnet, dass** das erste Ende jeder der Zugfedern (19) mit der konvexen Säule (21) verbunden ist.

5. Heißluftkocher nach Anspruch 1, **dadurch gekennzeichnet, dass** das Gehäuse (11) an der Garraumöffnung (102) mit einem elastischen Stift (15) versehen ist, wobei die Ofentürverkleidung (20) mit einem ersten Befestigungsschlitz (22) und einer ersten geneigten Führungsfläche (23) versehen ist, die entsprechend dem ersten Befestigungsschlitz (22) angeordnet ist, wobei, wenn die Ofentürverkleidung (20) zur Abdeckung der Garraumöffnung (102) hochgeklappt wird, der elastische Stift (15) unter Mitwirkung der ersten geneigten Führungsfläche (23) in den ersten Befestigungsschlitz (22) der Ofentürverkleidung (20) einrastet, um befestigt zu werden.

6. Heißluftkocher nach Anspruch 1, **dadurch gekennzeichnet, dass** gegenüberliegende vertikale Seitenwände des Garraums (101) jeweils mit einer Vielzahl von Einschubschlitzen (163) versehen sind, wobei der Heißluftkocher ferner Backofenroste (31) und eine Auffangschale (32) umfasst, und wobei die Backofenroste (31) und die Auffangschale (32) über die Garraumöffnung (102) in die Vielzahl von Einschubschlitzen (163) des Garraums (101) einsetzbar oder aus diesen entnehmbar sind.

## Revendications

1. Cuisinière à chauffage à air, comprenant un corps principal (10) et un panneau de porte de four, dans laquelle le corps principal (10) comprend un boîtier (11) et un composant à air chaud (18), le boîtier (11) a une chambre de cuisson (101) et une ouverture de chambre de cuisson (102) en communication avec la chambre de cuisson (101), le composant à air chaud (18) est monté dans le boîtier (11) pour délivrer en sortie de l'air chaud à la chambre de cuisson (101) ; le boîtier (11) du corps principal (10) est en outre pourvu d'un espace de logement (103), l'espace de logement (103) a une ouverture de logement (104) située du même côté que l'ouverture de chambre de cuisson (102), le panneau de porte de four (20) est assemblé de manière coulissante dans l'espace de logement (103) afin de basculer entre une première position dans laquelle il est rangé dans l'espace de logement (103) et une seconde position dans laquelle il est retiré de l'espace de logement (103), et le panneau de porte de four (20), lorsqu'il se trouve dans la seconde position, est articulé sur le boîtier (11) et peut être rabattu pour recouvrir l'ouverture de chambre de cuisson (102), afin de fonctionner comme un four à friteuse à air ;
**caractérisée en ce que** des parois latérales opposées de l'espace de logement (103) sont chacune pourvues d'un trou oblong de guidage (141), deux côtés du panneau de porte de four (20) sont chacun pourvus d'une colonne convexe (21), et la colonne convexe (21) est montée dans le trou oblong de guidage (141) de telle sorte que le panneau de porte de four (20) soit assemblé de manière coulissante dans l'espace de logement (103) ;
une section transversale de la colonne convexe (21) a au moins un premier diamètre d'une taille minimale et un second diamètre d'une taille maximale, une largeur du trou oblong de guidage (141) est adaptée au premier diamètre de la colonne convexe (21), lorsque le panneau de porte de four (20) est parallèle à une direction d'extension du trou oblong de guidage (141), le premier diamètre de la colonne convexe (21) est parallèle à une direction de la largeur du trou oblong de guidage (141) et monté de manière coulissante dans le trou oblong de guidage (141), une extrémité du trou oblong de guidage (141) tournée vers l'ouverture de logement (104) est reliée à un trou oblong d'articulation (142), un diamètre de trou du trou oblong d'articulation (142) est adapté au second diamètre de la colonne convexe (21), et lorsque le panneau de porte de four (20) se trouve dans la seconde position, la colonne convexe (21) est montée dans le trou oblong d'articulation (142) de telle sorte que le panneau de porte de four (20) soit articulé ;
la section transversale de la colonne convexe (21) est en forme de D ;
la cuisinière à chauffage à air comprend en outre un panier à friture (40), et lorsque le panneau de porte de four (20) se trouve dans la première position dans laquelle il est rangé, le panier à friture (40) peut être inséré dans ou séparé de la chambre de cuisson (101) par l'intermédiaire de l'ouverture de chambre de cuisson (102).

2. Cuisinière à chauffage à air selon la revendication 1, **caractérisée en ce que** l'espace de logement (103) se trouve au fond du boîtier (11).

3. Cuisinière à chauffage à air selon la revendication 1, **caractérisée en ce que** des ressorts de tension (19) sont en outre disposés dans l'espace de logement (103), une première extrémité de chacun des ressorts de tension (19) est reliée au panneau de porte de four (20), une seconde extrémité de chacun des ressorts de tension (19) est reliée au boîtier (11), et chacun des ressorts de tension (19) applique une force de traction sur le panneau de porte de four (20) dans une direction opposée à l'ouverture de logement (104).

4. Cuisinière à chauffage à air selon la revendication 3, **caractérisée en ce que** la première extrémité de chacun des ressorts de tension (19) est reliée à la colonne convexe (21).

5. Cuisinière à chauffage à air selon la revendication 1, **caractérisée en ce que** le boîtier (11) est pourvu d'une goupille élastique (15) au niveau de l'ouverture de chambre de cuisson (102), le panneau de porte de four (20) est pourvu d'une première fente de fixation (22) et d'une première surface de guidage inclinée (23) disposée en correspondance avec la première fente de fixation (22), et lorsque le panneau de porte de four (20) est rabattu pour recouvrir l'ouverture de chambre de cuisson (102), la goupille élastique (15) s'encliquette dans la première fente de fixation (22) du panneau de porte de four (20) grâce à la coopération de la première surface de guidage inclinée (23), pour être fixée.

6. Cuisinière à chauffage à air selon la revendication 1, **caractérisée en ce que** des parois latérales verticales opposées de la chambre de cuisson (101) sont chacune pourvues d'une pluralité de fentes d'insertion (163), la cuisinière à chauffage à air comprend en outre des grilles de four (31) et un bac à résidus (32), et les grilles de four (31) et le bac à résidus (32) peuvent être insérés dans ou séparés de la pluralité de fentes d'insertion (163) de la chambre de cuisson (101) par l'intermédiaire de l'ouverture de chambre de cuisson (102).
